# FASCICULE DE BREVET EUROPEEN

(11) **EP 3 132 159 B1**
(45) Date de publication et mention de la délivrance du brevet: **08.04.2020**
(21) Numéro de dépôt: 15714557.4
(22) Date de dépôt: 03.03.2015
(51) Int. Cl.: F16F 15/14

(54) **DISPOSITIF D'AMORTISSEMENT D'OSCILLATIONS DE TORSION**
VORRICHTUNG ZUR DÄMPFUNG VON TORSIONSSCHWINGUNGEN
DEVICE FOR DAMPING TORSIONAL OSCILLATIONS

(30) Priorité: 04.04.2014 FR 1453039
(43) Date de publication de la demande: 22.02.2017
(73) Titulaire: Valeo Embrayages, 80009 Amiens Cedex 2 (FR)
(72) Inventeur: DAEL, Dominique, F-76870 Gaillefontaine (FR); DHALLEINE, Christophe, F-80800 Villers-bretonneux (FR); DUTIER, Ivan, F-80260 Rainneville (FR); FLECHE, Benoît, F-60500 Chantilly (FR)
(74) Mandataire: Cardon, Nicolas
(86) Numéro de dépôt international: PCT/FR2015/050514
(87) Numéro de publication internationale: WO 2015/150651

(56) Documents cités:
- EP-A1- 2 667 050
- EP-A1- 2 687 749
- WO-A1-2013/156733

## Description

La présente invention concerne un dispositif d'amortissement d'oscillations de torsion, notamment pour un système de transmission de véhicule automobile. Un tel dispositif est décrit dans le document EP2687749.

Dans une telle application, le dispositif d'amortissement peut être intégré à un système d'amortissement de torsion d'un embrayage apte à relier sélectivement le moteur thermique à la boîte de vitesses, afin de filtrer les vibrations dues aux acyclismes du moteur.

En variante, dans une telle application, le dispositif d'amortissement peut être intégré à un disque de friction de l'embrayage.

On connaît de la demande DE 10 2009 042 812 un dispositif d'amortissement d'oscillations de torsion comprenant un support mobile autour d'un axe de rotation et une paire de masses pendulaires montées sur ce support avec une possibilité de déplacement limité par rapport à ce dernier. Un organe de liaison unique s'étendant circonférentiellement entre deux extrémités relie les deux masses pendulaires de la paire et porte un organe de butée limitant le déplacement de ces masses par rapport au support. Cet organe de butée est disposé sensiblement dans une position médiane par rapport aux deux extrémités circonférentielles de l'organe de liaison.

Un tel emplacement sur l'organe de liaison de l'organe de butée limite l'amplitude du déplacement des masses pendulaires par rapport au support. En outre, cet emplacement sur l'organe de liaison de l'organe de butée conduit à rapprocher radialement le centre de gravité des masses pendulaires de l'axe de rotation du support. Or, le filtrage effectué par le dispositif d'amortissement est d'autant plus efficace que l'amplitude du déplacement des masses pendulaires par rapport au support est importante et que la distance entre le centre de gravité des masses et l'axe de rotation est grande.

Il existe ainsi un besoin pour bénéficier d'un dispositif d'amortissement d'oscillations de torsion, notamment pour système de transmission de véhicule automobile, qui permette d'obtenir une filtration efficace de ces oscillations.

L'invention vise à répondre à ce besoin et elle y parvient, selon l'un de ses aspects, à l'aide d'un dispositif d'amortissement d'oscillations de torsion, comprenant :
- un support apte à se déplacer en rotation autour d'un axe,
- au moins une première et une deuxième masses pendulaires espacées axialement l'une par rapport à l'autre et mobiles par rapport au support, la première masse pendulaire étant disposée d'un premier côté du support et la deuxième masse pendulaire étant disposée d'un deuxième côté du support,
- deux organes de liaison de la première et de la deuxième masses pendulaires appariant lesdites masses, les organes de liaison étant espacés angulairement l'un par rapport à l'autre, chaque organe de liaison étant reçu en partie dans une ouverture ménagée dans le support, et chaque organe de liaison s'étendant angulairement dans le sens trigonométrique d'une première vers une deuxième extrémité dudit organe de liaison,
chaque organe de liaison étant associé à un organe de butée pour le déplacement des masses pendulaires par rapport au support, l'organe de butée associé à l'un des organes de liaison étant plus proche de la première que de la deuxième extrémité de cet organe de liaison tandis que l'organe de butée associé à l'autre organe de liaison est plus proche de la deuxième que de la première extrémité de cet autre organe de liaison.

Lorsque l'on observe les organes de liaison depuis une direction parallèle à l'axe de rotation, on constate ainsi que les organes de butée ne sont pas disposés au même emplacement d'un organe de liaison à l'autre. On parlera encore de « positionnement asymétrique » des organes de butée.

Un tel positionnement des organes de butée permet d'augmenter l'amplitude du déplacement des masses pendulaires et de déplacer radialement vers l'extérieur le centre de gravité des masses pendulaires, d'où un filtrage amélioré des oscillations de torsion.

Au sens de la présente demande, « axial » signifie « parallèlement à l'axe de rotation du support », « radial » signifie « le long d'un axe appartenant à un plan perpendiculaire à l'axe de rotation du support et coupant cet axe de rotation », et « angulairement » ou « circonférentiellement » signifie « autour de l'axe de rotation du support ».

Chaque organe de butée est par exemple porté par les deux masses pendulaires reliées par l'organe de liaison auquel cet organe de butée est associé. Chaque organe de butée s'étend par exemple axialement entre les deux masses pendulaires et il est solidarisé à chacune de ces masses pendulaires.

Chaque organe de butée peut être configuré de manière à amortir les chocs entre l'organe de liaison et le support, l'organe de butée pouvant alors être qualité d'«élastique ».

Chaque organe de butée peut définir :
- une première zone de butée contre le support pour le déplacement des masses pendulaires par rapport au support dans le sens trigonométrique, et
- une deuxième zone de butée contre le support pour le déplacement des masses pendulaires par rapport au support dans le sens anti- trigonométrique.

Chaque zone de butée peut être à distance l'une de l'autre, de sorte que le contact entre l'organe de butée et le support s'effectue à des endroits différents de l'organe de butée selon le sens de déplacement des masses pendulaires par rapport au support, réduisant ainsi l'usure de l'organe de butée qui subit localement moins de chocs contre le support que selon l'art antérieur.

L'organe de butée est par exemple configuré pour que :
- l'une de la première et de la deuxième zone de butée puisse venir au contact du contour radialement intérieur de l'ouverture recevant l'organe de liaison, et
- l'autre de la première et de la deuxième zone de butée puisse venir au contact d'un contour latéral de ladite ouverture, ce contour latéral reliant le contour radialement intérieur et le contour radialement extérieur de l'ouverture.

Pour deux organes de liaison associés à une même paire de masses pendulaires, l'interaction entre lesdites zones de butée et le support peut être inversée. Ainsi, dans un exemple de mise en œuvre de l'invention :
- l'un des organes de butée présente une première zone de butée venant au contact du contour latéral de l'ouverture lorsque les masses pendulaires sont dans une position de butée à l'issue d'un déplacement par rapport au support selon le sens trigonométrique, et une deuxième zone de butée venant au contact du contour radialement intérieur de l'ouverture lorsque les masses pendulaires sont dans une position de butée à l'issue d'un déplacement par rapport au support dans le sens anti-trigonométrique, et
- l'autre organe de butée présente une première zone de butée venant au contact du contour radialement intérieur de l'ouverture lorsque les masses pendulaires sont dans une position de butée à l'issue d'un déplacement par rapport au support selon le sens trigonométrique et une deuxième zone de butée venant au contact du contour latéral de l'ouverture lorsque les masses pendulaires sont dans une position de butée à l'issue d'un déplacement par rapport au support dans le sens anti-trigonométrique.

Chaque organe de butée peut comprendre des portions élastiques au niveau de la première et de la deuxième zone de butée, et l'organe de liaison et l'ouverture peuvent avoir des formes telles que, lorsque l'organe de liaison vient en butée contre le support par l'une de la première et de la deuxième zone de butée sous l'effet d'une force d'inertie :
- la portion élastique de ladite zone de butée se comprime tant que la force d'inertie est inférieure à une valeur prédéfinie, et
- l'organe de liaison vient au contact du support lorsque la force d'inertie est supérieure à cette valeur prédéfinie.

Autrement dit, les portions élastiques peuvent être dimensionnées de manière à ce que l'organe de butée seul absorbe les chocs liés à la venue en butée de l'organe de liaison contre le support tant que la force liée à cette venue en butée est inférieure à une valeur prédéfinie. Lorsque cette valeur prédéfinie est dépassée, l'organe de butée ne peut plus se comprimer davantage, de sorte que l'organe de liaison vient en contact avec le support, ce contact absorbant alors les chocs. On peut ainsi :
- d'une part éviter d'avoir à dimensionner les portions élastiques de l'organe de liaison pour qu'elles absorbent la totalité des chocs entre organe de liaison et support, et
- d'autre part protéger les portions élastiques de dégradations lorsqu'elles ne sont plus capables d'absorber les chocs puisque ces chocs sont alors absorbés par le contact direct entre l'organe de liaison avec le support.

Selon un exemple de mise en œuvre de l'invention, chaque organe de butée comprend :
- deux tiges de maintien espacées angulairement, et
- une pièce de jonction, notamment solidaire des tiges de maintien, s'étendant entre les deux tiges et apte à venir au contact du support lorsque l'organe de liaison est en butée contre celui-ci, la première zone de butée comprenant la portion de la pièce de jonction en regard d'une des tiges et la deuxième zone de butée comprenant la portion de la pièce de jonction en regard de l'autre tige.

La pièce de jonction peut être en permanence ou non au contact de l'organe de liaison.

Chaque extrémité axiale d'une tige de maintien est par exemple disposée dans un logement ménagé dans une des masses pendulaires, de manière à maintenir radialement et angulairement l'organe de butée par rapport aux masses pendulaires, et ainsi à l'organe de liaison.

Les logements recevant les extrémités respectives d'une tige de maintien peuvent être configurés pour assurer un maintien axial desdites tiges, et donc de l'organe de butée. Il s'agit par exemple de logements borgnes.

Dans un plan orthogonal à l'axe de rotation pour le support, la pièce de jonction peut présenter au moins une portion incurvée. La pièce de jonction peut présenter dans ce plan une forme de bande.

Les tiges et la pièce de jonction peuvent être réalisées d'une seule pièce ou non.

Lorsque les tiges et la pièce de jonction sont des pièces distinctes, seule la pièce de jonction ou seules les tiges de maintien peuvent présenter les propriétés élastiques mentionnées ci-dessus permettant l'absorption des chocs. La pièce de jonction est par exemple en élastomère.

Pour une paire de masses pendulaires, le support peut comprendre :
- deux ouvertures espacées angulairement, et
- un montant interposé entre ces ouvertures,
les ouvertures étant, dans un plan orthogonal à l'axe de rotation, des images symétriques par rapport à une droite passant : par l'axe de rotation et par le montant séparant les deux ouvertures. La droite définissant l'axe de symétrie peut être la bissectrice de l'angle global formé entre les extrémités les plus opposées des deux ouvertures par delà le montant.

Chaque ouverture peut recevoir l'un des organes de liaison. Autrement dit, un seul organe de liaison est alors reçu par ouverture ménagée dans le support.

Chaque ouverture ménagée dans le support peut s'étendre entre deux extrémités circonférentielles sur un secteur angulaire donné mesuré depuis l'axe de rotation du support, et cette ouverture peut être, dans un plan orthogonal audit axe, asymétrique par rapport à une droite passant par l'axe de rotation du support et faisant avec chaque extrémité circonférentielle de l'ouverture un angle égal à la moitié de la valeur dudit secteur angulaire. Une telle forme d'ouverture peut permettre que le déplacement des masses pendulaires par rapport au support combine une translation des masses autour d'un axe parallèle à l'axe de rotation du support et une rotation des masses pendulaires autour de leur centre de gravité.

Le dispositif peut comprendre deux organes de roulement des masses pendulaires par rapport au support, chaque organe de roulement étant mobile par rapport au support et aux masses pendulaires, et apte à coopérer avec une piste de roulement définie par un organe de liaison et avec une piste de roulement définie par le support, afin de permettre le déplacement des masses pendulaires par rapport au support.

La piste de roulement définie par chaque organe de liaison peut être ménagée par une partie du contour dudit organe de liaison. La piste de roulement définie par l'organe de liaison est par exemple définie par une partie seulement, dans un plan orthogonal à l'axe de rotation du support, du contour radialement extérieur de cet organe de liaison. Le contour de l'organe de liaison peut, au moins au niveau de la piste de roulement, être formé ou non par un revêtement formé sur le reste de l'organe de liaison.

Chaque organe de liaison coopère par exemple avec un seul organe de roulement et cet organe de liaison peut être, dans un plan orthogonal à l'axe de rotation du support, asymétrique par rapport à la normale à la tangente au contact entre l'organe de roulement et l'organe de liaison lorsque le dispositif est au repos. Au sens de la présente demande, le dispositif est au repos lorsqu'il ne filtre pas d'oscillations de torsion liées aux acyclismes du moteur. Une telle forme d'organe de liaison peut permettre, en complément ou non de la forme asymétrique mentionnée précédemment d'ouverture recevant ledit organe de liaison, que le déplacement des masses pendulaires par rapport au support combine une translation des masses autour d'un axe parallèle à l'axe de rotation du support et une rotation des masses pendulaires autour de leur centre de gravité.

Chacune de la piste de roulement définie par un organe de liaison et de la piste de roulement définie par le support peut présenter une ou plusieurs portions concaves dans un plan perpendiculaire à l'axe de rotation du support, ces portions coopérant avec l'organe de roulement.

La piste de roulement définie par le support est par exemple définie par une portion du contour, notamment du contour radialement extérieur, de l'ouverture recevant l'organe de liaison.

L'organe de roulement est par exemple un rouleau de section circulaire dans un plan perpendiculaire à l'axe de rotation du support. Les extrémités axiales du rouleau peuvent être dépourvues de rebord annulaire fin.

Le rouleau peut être uniquement sollicité en compression entre les pistes de roulement mentionnées ci-dessus.

Dans tout ce qui précède, chaque organe de liaison peut être rigidement couplé à la première et à la deuxième masse pendulaire, par exemple par soudure, frettage, ou vissage.

Chaque organe de butée peut être solidaire de l'organe de liaison auquel il est associé.

L'organe de liaison peut comprendre deux barres, chaque barre s'étendant axialement et comprenant :
- une première région rigidement couplée à la première masse pendulaire,
- une deuxième région rigidement couplée à la deuxième masse pendulaire, et
- une région intermédiaire reçue dans l'ouverture ménagée dans le support.

La première région et la deuxième région peuvent former des extrémités opposées de ladite barre. Les deux barres peuvent être sensiblement identiques.

L'organe de liaison peut comprendre une poutre de liaison s'étendant perpendiculairement aux deux barres et étant rigidement couplée à la région intermédiaire de chacune desdites barres.

En variante, la poutre de liaison qui s'étend perpendiculairement aux deux barres peut être réalisée d'une seule pièce avec ces dernières.

Lorsque l'organe de liaison comprend deux barres et une poutre de liaison telles que définies ci-dessus, la piste de roulement définie par l'organe de liaison peut être formée par une partie du contour radialement extérieur de la poutre de liaison.

Chaque masse pendulaire peut comprendre au moins une pièce d'interposition disposée axialement entre le support et ladite masse pendulaire. Une telle pièce d'interposition permet d'éviter un contact entre le support et les masses pendulaires. Lorsque le support et les masses pendulaires sont réalisés en métal, la présence de cette pièce d'interposition permet d'éviter un contact métallique entre masses pendulaires et support, et ainsi une usure de ces éléments.

La pièce d'interposition est, dans les exemples considérés, une pièce distincte des masses pendulaires et du support. Chaque pièce d'interposition peut être portée par une des masses pendulaires. La pièce d'interposition peut se présenter sous la forme d'un patin.

Dans tout ce qui précède, le dispositif peut comprendre une pluralité de premières et de deuxièmes masses pendulaires, chaque première masse pendulaire étant appariée à une deuxième masse pendulaire.

Dans tout ce qui précède, le support peut présenter une pluralité de cavités adjacentes angulairement et disposées radialement intérieurement par rapport aux ouvertures. Ces cavités peuvent présenter dans un plan orthogonal à l'axe de rotation une forme s'évasant radialement vers l'extérieur, les bords latéraux de chaque cavité divergeant lorsque l'on se déplace radialement vers l'extérieur du support. De telles cavités peuvent permettre d'optimiser l'inertie du support du dispositif.

L'invention a encore pour objet, selon un autre de ses aspects, un dispositif d'amortissement d'oscillations de torsion, comprenant :
- un support apte à se déplacer en rotation autour d'un axe,
- au moins une première et une deuxième masses pendulaires espacées axialement l'une par rapport à l'autre et mobiles par rapport au support, la première masse pendulaire étant disposée d'un premier côté du support et la deuxième masse pendulaire étant disposée d'un deuxième côté du support,
- au moins un organe de liaison de la première et de la deuxième masses pendulaires appariant lesdites masses, et
- au moins un organe de roulement des masses pendulaires par rapport au support, l'organe de roulement étant mobile par rapport au support et aux masses pendulaires, et apte à coopérer avec une piste de roulement définie par l'organe de liaison et avec une piste de roulement définie par le support, afin de permettre le déplacement des masses pendulaires par rapport au support, l'organe de liaison étant, dans un plan orthogonal à l'axe de rotation du support, asymétrique par rapport à la normale à la tangente au contact, lorsque le dispositif est au repos, entre l'organe de roulement et la piste définie par l'organe de liaison.

Tout ou partie des caractéristiques mentionnées précédemment s'applique encore à cet autre aspect de l'invention, et notamment les caractéristiques suivantes:
- chaque organe de liaison coopère avec un seul organe de roulement,
- chaque ouverture ménagée dans le support s'étend entre deux extrémités circonférentielles sur un secteur angulaire donné mesuré depuis l'axe de rotation du support, et cette ouverture est, dans un plan orthogonal audit axe, asymétrique par rapport à une droite passant par l'axe de rotation du support et faisant avec chaque extrémité circonférentielle de l'ouverture un angle égal à la moitié de la valeur dudit secteur angulaire,
- le dispositif comprend deux organes de liaison de la première et de la deuxième masses pendulaires appariant lesdites masses, les organes de liaison étant espacés angulairement l'un par rapport à l'autre, chaque organe de liaison étant reçu en partie dans une ouverture ménagée dans le support,
- pour une paire de masses pendulaires, le support comprend: deux ouvertures espacées angulairement et un montant interposé entre ces ouvertures, les ouvertures étant, dans un plan orthogonal à l'axe de rotation, des images symétriques par rapport à une droite passant par l'axe de rotation et par le montant séparant les deux ouvertures. La droite définissant l'axe de symétrie est notamment la bissectrice de l'angle global formé entre les extrémités les plus opposées des deux ouvertures par delà le montant. Chaque organe de liaison appariant ces deux masses pendulaires peut être reçu dans une de ces ouvertures.

L'invention a encore pour objet, selon un autre de ses aspects, un composant d'un système de transmission d'un véhicule automobile, notamment un double volant amortisseur, un convertisseur de couple hydrodynamique, ou un disque de friction, comprenant un dispositif d'amortissement tel que défini ci-dessus.

Dans un tel composant, le support du pendule peut être l'un parmi :
- un voile du composant,
- une rondelle de guidage du composant,
- une rondelle de phasage du composant, ou
- un support distinct dudit voile, de ladite rondelle de guidage et de ladite rondelle de phasage.

L'invention pourra être mieux comprise à la lecture de la description qui va suivre d'un exemple non limitatif de mise en œuvre de celle-ci et à l'examen du dessin annexé sur lequel :
- la figure 1 représente en partie en éclaté un dispositif d'amortissement selon un exemple de mise en œuvre de l'invention,
- la figure 2 représente le dispositif d'amortissement de la figure 1 lorsqu'il est assemblé et lorsqu'il est au repos,
- la figure 3 représente le dispositif d'amortissement de la figure 1 lorsqu'il est assemblé et lorsque les masses pendulaires sont dans une position de butée à l'issue d'un déplacement dans le sens anti-trigonométrique par rapport au support, et
- les figures 4 et 5 représentent respectivement des détails de la figure 2 et de la figure 3.

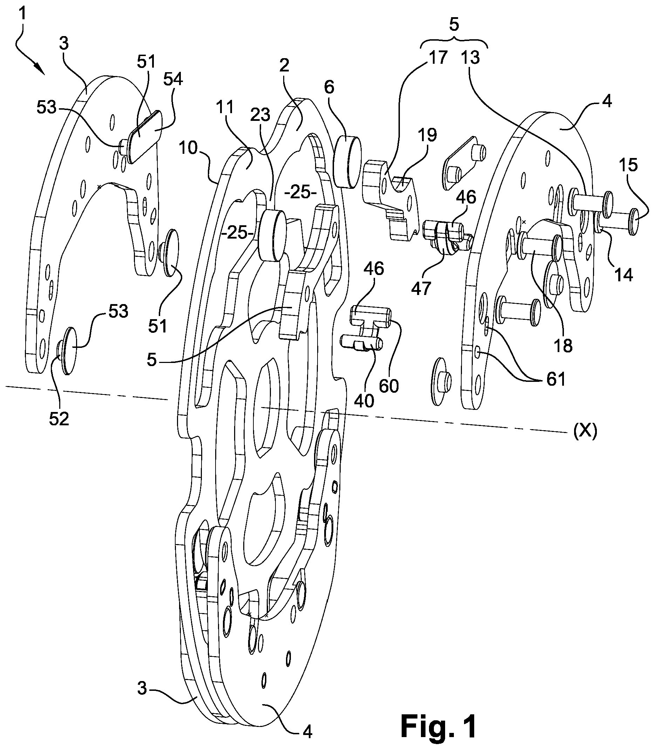

On a représenté sur la figure 1 un dispositif d'amortissement 1 selon un exemple de mise en œuvre de l'invention. Le dispositif d'amortissement 1 est de type oscillateur pendulaire.

Le dispositif 1 est notamment apte à équiper un système de transmission de véhicule automobile, étant par exemple intégré à un composant non représenté d'un tel système de transmission tel qu'un double volant amortisseur, un convertisseur de couple hydrodynamique ou un disque de friction.

De manière connue, un tel composant peut comprendre un amortisseur de torsion présentant au moins un élément d'entrée, au moins un élément de sortie, et des organes élastiques à action circonférentielle qui sont interposés entre lesdits éléments d'entrée et de sortie. Au sens de la présente demande, les termes « entrée » et « sortie » sont définis par rapport au sens de transmission du couple depuis le moteur thermique du véhicule vers les roues de ce dernier.

Le dispositif 1 comprend dans l'exemple considéré:
- un support 2 apte à se déplacer en rotation autour d'un axe X,
- une pluralité de premières 3 et deuxièmes 4 masses pendulaires mobiles par rapport au support 2,
- des organes de liaison 5 des premières 3 et deuxièmes 4 masses pendulaires, deux organes de liaison 5 reliant une première 3 et une deuxième 4 masse pendulaire, de manière à former une paire de masses pendulaires, et
- des organes de roulement 6 associés à chaque organe de liaison 5.

Le support 2 du dispositif d'amortissement 1 peut être constitué par :
- un élément d'entrée de l'amortisseur de torsion,
- un élément de sortie ou un élément de phasage intermédiaire disposé entre deux séries de ressort de l'amortisseur, ou
- un élément lié en rotation à un des éléments précités et distinct de ces derniers, étant alors par exemple un support propre au pendule.

Le dispositif 1 peut notamment être porté par une rondelle de guidage ou une rondelle de phasage, et être disposé à la périphérie radialement externe de ces rondelles.

Dans l'exemple considéré, le support 2 présente globalement une forme d'anneau comportant deux côtés opposés 10 et 11 qui sont ici des faces planes.

Comme on peut le voir sur la figure 1, les première 3 et deuxième 4 masses pendulaires d'une paire de masses pendulaires sont espacées axialement l'une par rapport à l'autre, la première masse pendulaire3 étant disposée du premier côté 10 du support 2 et la deuxième masse pendulaire4 étant disposée du deuxième côté 11 du support 2.

Chaque première 3 et deuxième 4 masse pendulaire présente globalement dans l'exemple décrit une forme de plaquette et s'étend circonférentiellement en arc de cercle de sorte que ces masses pendulaires présentent ici un bord radialement intérieur et un bord radialement extérieur qui suivent globalement les bords correspondants du support 2.

Chaque organe de liaison 5 s'étend angulairement depuis une première 5.1 vers une deuxième 5.2 extrémité dans le sens trigonométrique. Chaque organe de liaison 5 est ici rigidement couplé à la première masse pendulaire 3 et à la deuxième masse pendulaire 4 d'une paire, c'est-à-dire qu'il n'existe pas de degré de liberté d'une part entre l'organe de liaison 5 et cette première masse pendulaire 3, et d'autre part entre l'organe de liaison 5 et cette deuxième masse pendulaire 4.

Comme on peut le voir sur les figures 1 à 5, chaque organe de liaison 5 peut comprendre deux barres 13 sensiblement identiques et s'étendant toutes deux parallèlement à l'axe X. Chaque extrémité axiale 14, 15 d'une barre 13 est dans l'exemple considéré solidarisée à l'une des masses pendulaires 3, 4 de la paire de masses pendulaires. Chaque extrémité 14, 15 d'une barre 13 est par exemple reçue dans un trou traversant ménagé dans une masse pendulaire 3, 4 et un rivetage desdites extrémités 14, 15 peut ensuite avoir lieu pour permettre la solidarisation mentionnée ci-dessus.

Dans l'exemple considéré, l'organe de liaison 5 forme ainsi une entretoise déterminant notamment l'écartement axial entre la première 3 et la deuxième masse pendulaire 4 d'une paire de masses pendulaires.

Toujours dans l'exemple considéré, l'organe de liaison 5 comprend en outre une poutre de liaison 17 s'étendant perpendiculairement à l'axe X. La poutre de liaison 17 est ici rigidement couplée aux barres 13 au niveau de régions intermédiaires 18 de ces dernières, disposées entre les extrémités axiales 14 et 15.

Comme on le verra par la suite, la poutre de liaison 17 comprend un contour radialement extérieur 19 dont une partie définit une piste de roulement 21.

Chaque organe de liaison 5 peut être une pièce monobloc obtenue par frappe. En variante, chaque organe de liaison 5 est réalisé en au moins deux pièces, respectivement une pièce qui forme la poutre de liaison 17 et qui comporte à chaque extrémité un trou axial pour le montage dans chaque trou d'une paire de rivets constituant les barres 13.

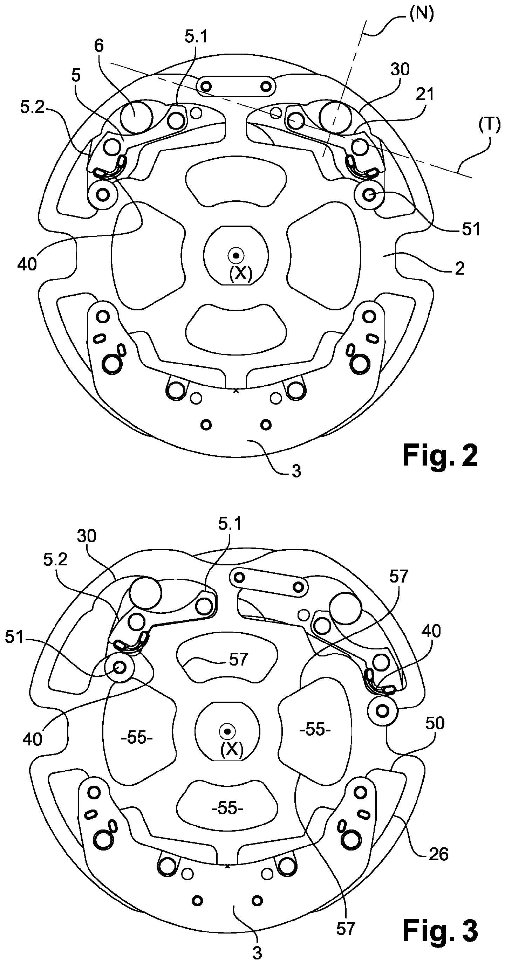

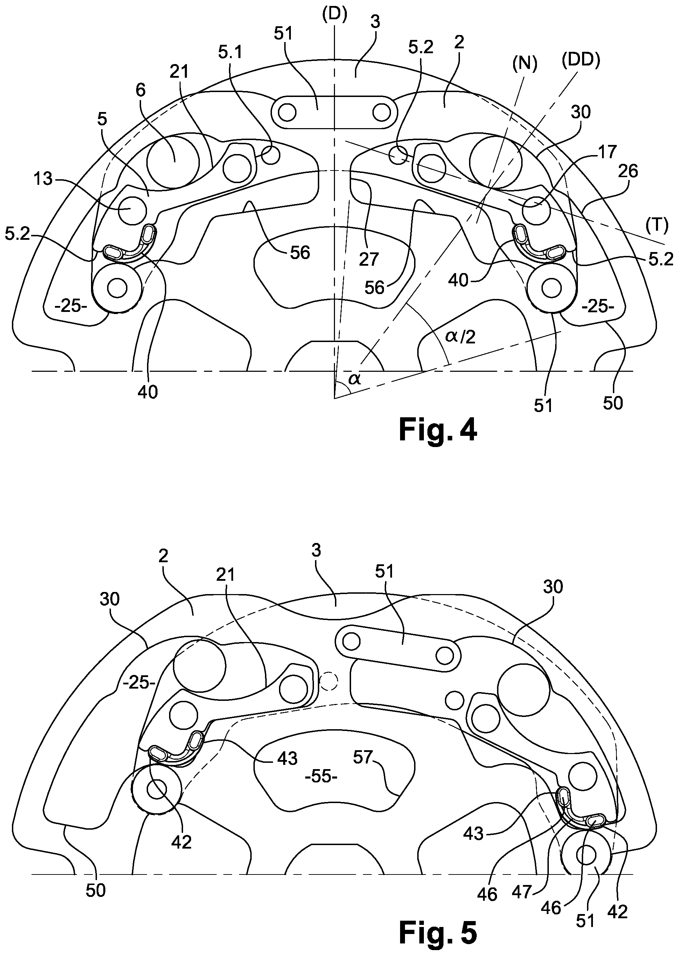

Comme représenté sur les figures 2 et 4, dans lesquelles le dispositif 1 est au repos, chaque organe de liaison 5 peut présenter une forme asymétrique par rapport à la normale N à la tangente T au contact entre l'organe de roulement 6 et la piste de roulement 21 définie par cet organe de liaison 5. Autrement dit, l'organe de liaison 5 s'étend davantage d'un côté de l'autre de cette normale N dans un plan orthogonal à l'axe de rotation X.

Comme on peut le voir sur les figures, chaque organe de liaison 5 s'étend en partie dans une ouverture 25 ménagée dans le support 2. Dans l'exemple considéré, chaque paire de masses pendulaires 3, 4 est associée à deux ouvertures 25 et chacune de ces ouvertures 25 coopère avec un seul des organes de liaison 5. La région intermédiaire 18 de chaque barre 13 et la poutre de liaison 17 sont par exemple reçues dans l'ouverture 25.

Comme on le verra par la suite, le contour radialement extérieur 26 de chaque ouverture 25, qui est défini par un bord du support 2, comprend dans l'exemple considéré une portion qui définit une piste de roulement 30.

Comme représenté sur la figure 4, dans le plan de la figure, les ouvertures 25 associées à une paire de masses pendulaires 3, 4 peuvent être des images symétriques l'une de l'autre par rapport à une droite D passant par l'axe de rotation X du support 2 et par le montant 27 séparant ces deux ouvertures 25. La droite D forme ici une bissectrice de l'angle maximal défini entre une extrémité angulaire 50 d'une des deux ouvertures 25 et une extrémité angulaire 50 de l'autre ouverture 25 associée à cette paire de masses pendulaires 3, 4. Chaque extrémité angulaire 50 est ici définie par un bord latéral de l'ouverture 25.

En outre, comme représenté encore sur la figure 4, chaque ouverture 25 peut s'étendre entre ses deux extrémités angulaires 50 sur un secteur angulaire donné α mesuré depuis l'axe de rotation X du support 2. Dans le plan de la figure 4, chaque ouverture 25 peut être asymétrique par rapport à une droite DD passant par l'axe X et faisant avec chaque extrémité 50 un angle égal à a/2.

Comme on peut le voir sur l'ensemble des figures, le support 2 comprend encore dans l'exemple représenté des cavités 55 adjacentes angulairement et disposées radialement intérieurement par rapport aux ouvertures 25. Ces cavités peuvent présenter dans le plan de la figure 4 une forme s'évasant radialement vers l'extérieur, les bords latéraux 57 de chaque cavité 55 divergeant lorsque l'on se déplace radialement vers l'extérieur du support 2.

On va maintenant décrire plus précisément les organes de roulement 6. Chaque organe de roulement 6 est mobile par rapport au support 2 et aux masses pendulaires 3 et 4. Dans l'exemple considéré, chaque organe de roulement 6 est formé par un rouleau. Chaque rouleau 6 présente dans le plan des figures 4 et 5 une section circulaire. Comme représenté sur les figures, chaque rouleau 6 peut être plein mais, en variante, il pourrait s'agir d'une pièce creuse, par exemple de forme tubulaire. Chaque rouleau 6 est ici est dépourvu de rebord annulaire ménagé à chacune de ses extrémités axiales et s'étendant perpendiculairement à l'axe X.

Chaque rouleau 6 coopère dans l'exemple considéré avec deux pistes de roulement 21 et 30 mentionnées précédemment. Plus précisément, le rouleau coopère au niveau radialement intérieur avec la piste de roulement 21 et au niveau radialement extérieur avec la piste de roulement 30 lors de son déplacement par rapport au support 2 et aux masses pendulaires 3 et 4. Le rouleau 6 peut être uniquement sollicité en compression entre les pistes de roulement 21 et 30.

Dans l'exemple considéré, le dispositif 1 comprend encore des pièces d'interposition 51 disposées axialement entre chaque masse pendulaire 3, 4 et le support 2. Chaque pièce d'interposition 51 est ici distincte de la masse pendulaire 3, 4 et du support 2, étant rapportée sur la masse pendulaire 3, 4.

Pour une masse pendulaire donnée, deux pièce d'interposition 51 sensiblement identiques sont chacune montée sur une extrémité circonférentielle de ladite masse tandis qu'une pièce d'interposition 51 de forme différente est montée sur la masse pendulaire à mi chemin entre les extrémités circonférentielles de ladite masse pendulaire 3, 4.

Chaque pièce d'interposition 51 peut comprendre :
- un ou plusieurs tétons 52 destinés à être montés dans un trou ménagé dans la masse pendulaire 3, 4 pour assurer la fixation sur cette masse de la pièce d'interposition 51, et
- une partie d'interposition 53 disposée entre la masse pendulaire 3, 4 et le support 4 lorsque le dispositif d'amortissement 1 est assemblé.

La portion d'interposition 53 d'une pièce d'interposition 51 disposée à une extrémité circonférentielle d'une masse pendulaire 3, 4 a par exemple une forme circulaire dans le plan de la figure 4 tandis que la portion d'interposition 53 d'une pièce d'interposition 51 disposée à mi chemin entre les extrémités circonférentielles de ladite masse présente une forme plus allongée.

Dans l'exemple des figures 1 à 5, chaque pièce d'interposition 51 se présente sous la forme d'un patin, étant notamment réalisée en plastique, mais l'invention n'est pas limitée à ce choix de matériau.

Comme représenté sur l'exemple des figures, chaque organe de liaison 5 est associé à un organe de butée 40 pour le déplacement des masses pendulaires 3, 4 par rapport au support 2. Pour une paire de masses pendulaires 3, 4 à laquelle sont associés deux organes de liaison 5, l'organe de butée 40 pour l'un des organes de liaison 5 est plus proche de la première extrémité 5.1 que de la deuxième extrémité 5.2 de cet organe de liaison 5 tandis que l'organe de butée 40 pour l'autre organe de liaison 5 est plus proche de la deuxième extrémité 5.2 que de la première extrémité 5.1 de cet autre organe de liaison 5. Chaque organe de butée 40 est ici solidaire d'un des organes de liaison 5.

Chaque organe de butée 40 définit dans l'exemple considéré :
- une première zone de butée 42 contre le support 2 pour le déplacement des masses pendulaires 3, 4 par rapport au support dans le sens trigonométrique, et
- une deuxième zone de butée 43 contre le support 2 pour le déplacement des masses pendulaires 3, 4 par rapport au support dans le sens anti-trigonométrique, la deuxième zone de butée 43 étant à distance de la première zone de butée 42.

Dans l'exemple illustré, les organes de butée 40 sont positionnés de façon inversée d'un organe de liaison 5 à l'autre d'une même paire de masses pendulaires 3, 4. L'un des organes de liaison 5 coopère ainsi avec un organe de butée 40 positionné de manière à ce que :
- sa première zone de butée 42 vienne au contact du contour latéral 50 de l'ouverture 25 lorsque les masses pendulaires 3, 4 sont dans une position de butée à l'issue d'un déplacement par rapport au support 2 selon le sens trigonométrique,
- sa deuxième zone de butée 43 vienne au contact du contour radialement intérieur 56 de l'ouverture 25 lorsque les masses pendulaires 3, 4 sont dans une position de butée à l'issue d'un déplacement par rapport au support 2 dans le sens anti trigonométrique, cette position de butée étant représentée sur les figures 3 et 5.

L'autre organe de liaison 5 coopère quant à lui avec un organe de butée 40 positionné de manière à ce que :
- sa première zone de butée 42 vienne au contact du contour radialement intérieur 56 de l'ouverture 25 lorsque les masses pendulaires 3, 4 sont dans une position de butée à l'issue d'un déplacement par rapport au support selon le sens trigonométrique, et
- sa deuxième zone de butée 43 vienne au contact du contour latéral 50 de l'ouverture 25 lorsque les masses pendulaires 3, 4 sont dans une position de butée à l'issue d'un déplacement par rapport au support 2 dans le sens anti-trigonométrique, cette position de butée étant représentée sur les figures 3 et 5.

Chaque organe de butée 40 comprend dans l'exemple considéré des portions élastiques au niveau de la première 42 et de la deuxième 43 zone de butée.

Ces portions élastiques d'une part, les formes de l'ouverture 25 et de l'organe de liaison 5 d'autre part, peuvent être telles que, lorsque l'organe de liaison 5 vient en butée contre le support 2 via l'une de la première 42 et de la deuxième 43 zone de butée sous l'effet d'une force d'inertie :
- la portion élastique de ladite zone de butée 42, 43 se comprime tant que la force d'inertie est inférieure à une valeur prédéfinie, et
- l'organe de liaison 5 vient ensuite au contact du support 2 lorsque la force d'inertie est supérieure à cette valeur prédéfinie.

Dans l'exemple des figures, chaque organe de butée 40 comprend :
- deux tiges de maintien 46 espacées angulairement, et
- une pièce de jonction 47 s'étendant entre les deux tiges de maintien 46 et apte à venir au contact du support 2 lorsque les organes de liaison 5 sont en butée contre celui-ci.

La première zone de butée 42 est ici formée par la portion de la pièce de jonction 47 en regard d'une des tiges de maintien 46 et la deuxième zone de butée 43 est alors formée par la portion de la pièce de jonction 47 en regard de l'autre tige de maintien 46.

Les tiges de maintien 46 et la pièce de jonction 47 peuvent être réalisées d'une seule pièce ou non.

Lorsque les tiges de maintien 46 et la pièce de jonction 47 sont des pièces distinctes, seule la pièce de jonction 47 peut présenter les propriétés élastiques mentionnées ci-dessus permettant la compression des portions élastiques de l'organe de butée. La pièce de jonction 47 est par exemple en élastomère, ayant dans le plan de la figure 4 une forme de bande.

Dans l'exemple considéré, chaque extrémité axiale 60 d'une tige de maintien 46 est disposée dans un logement 61 ménagé dans une des masses pendulaires 3, 4. Les logements 61 permettent ici le maintien de chaque tige de maintien 46 dans une position axiale donnée par les masses pendulaires 3, 4 entre lesquelles elle est interposée.

L'invention n'est pas limitée aux exemples qui viennent d'être décrits.

En particulier seules deux paires de masses pendulaires 3 et 4 sont portées par le support 2 représenté sur les figures, mais un nombre différents de paires de masses pendulaires 3 et 4 est possible.

## Revendications

1. Dispositif d'amortissement (1) d'oscillations de torsion, comprenant :
- un support (2) apte à se déplacer en rotation autour d'un axe (X),
- au moins une première (3) et une deuxième (4) masses pendulaires espacées axialement l'une par rapport à l'autre et mobiles par rapport au support (2), la première masse pendulaire (3) étant disposée d'un premier côté (10) du support (2) et la deuxième masse pendulaire (4) étant disposée d'un deuxième côté (11) du support (2),
- deux organes de liaison (5) de la première (3) et de la deuxième (4) masses pendulaires appariant lesdites masses, les organes de liaison (5) étant espacés angulairement l'un par rapport à l'autre, chaque organe de liaison (5) étant reçu en partie dans une ouverture (25) ménagée dans le support (2), et chaque organe de liaison (5) s'étendant angulairement dans le sens trigonomètrique d'une première (5.1) vers une deuxième (5.2) extrémité dudit organe de liaison (5), **caractérisé en ce que** chaque organe de liaison (5) est associé à un organe de butée (40) pour le déplacement des masses pendulaires (3, 4) par rapport au support (2), l'organe de butée (40) associé à l'un des organes de liaison (5) étant plus proche de la première (5.1) que de la deuxième (5.2) extrémité de cet organe de liaison (5), tandis que l'organe de butée (40) associé à l'autre organe de liaison (5) est plus proche de la deuxième (5.2) que de la première (5.1) extrémité de cet autre organe de liaison (5).

2. Dispositif selon la revendication 1, chaque organe de butée (40) étant configuré de manière à amortir les chocs entre l'organe de liaison (5) et le support (2).

3. Dispositif selon la revendication 1 ou 2, chaque organe de butée (40) définissant:
- une première zone (42) de butée contre le support (2) pour le déplacement des masses pendulaires (3, 4) par rapport au support (2) dans le sens trigonomètrique, et
- une deuxième zone (43) de butée contre le support (2) pour le déplacement des masses pendulaires (3, 4) par rapport au support dans le sens anti-trigonométrique.

4. Dispositif selon la revendication 3, chaque organe de butée (40) étant configuré pour que :
- l'une de la première (42) et de la deuxième (43) zone de butée puisse venir au contact du contour radialement intérieur (56) de l'ouverture (25) recevant l'organe de liaison (5),
- l'autre de la première (42) et de la deuxième (43) zone de butée puisse venir au contact d'un contour latéral (50) de ladite ouverture (25), ce contour latéral reliant le contour radialement intérieur et le contour radialement extérieur de l'ouverture (25).

5. Dispositif selon la revendication 3 ou 4, chaque organe de butée (40) comprenant des portions élastiques au niveau de la première (42) et de la deuxième (43) zone de butée, et l'organe de liaison (5) et l'ouverture (25) ayant des formes telles que, lorsque l'organe de liaison (5) vient en butée contre le support (2) par l'une de la première (42) et de la deuxième (43) zone de butée sous l'effet d'une force d'inertie :
- la portion élastique de ladite zone de butée (42, 43) se comprime tant que la force d'inertie est inférieure à une valeur prédéfinie, et
- l'organe de liaison (5) vient au contact du support (2) lorsque la force d'inertie est supérieure à cette valeur prédéfinie.

6. Dispositif selon l'une quelconque des revendications 3 à 5, chaque organe de butée (40) comprenant :
- deux tiges de maintien (46) espacées angulairement, et
- une pièce de jonction (47) s'étendant entre les deux tiges de maintien (46) et étant apte à venir au contact du support (2) lorsque l'organe de liaison (5) est en butée contre le support,
la première zone de butée (42) comprenant la portion de la pièce de jonction (47) en regard d'une des tiges (46) et la deuxième zone de butée (43) comprenant la portion de la pièce de jonction (47) en regard de l'autre tige (46).

7. Dispositif selon l'une quelconque des revendications précédentes, le support (2) comprenant pour une paire de masses pendulaires (3, 4) :
- deux ouvertures (25) espacées angulairement, et
- un montant (27) interposé entre ces ouvertures (25),
chaque ouverture (25) recevant l'un des organes de liaison (5), et les ouvertures (25) étant, dans un plan orthogonal à l'axe de rotation (X), des images symétriques par rapport à une droite (D) passant par l'axe de rotation (X) et par le montant (27) séparant les deux ouvertures (25).

8. Dispositif selon l'une quelconque des revendications précédentes, l'ouverture (25) ménagée dans le support (2) s'étendant entre deux extrémités circonférentielles (50) sur un secteur angulaire (α) donné mesuré depuis l'axe de rotation (X), et cette ouverture (25) étant, dans un plan orthogonal audit axe (X), asymétrique par rapport à une droite (DD) passant par l'axe de rotation (X) et faisant avec chaque extrémité circonférentielle (50) de l'ouverture (25) un angle égal à la moitié de la valeur dudit secteur angulaire (α).

9. Dispositif selon l'une quelconque des revendications précédentes, comprenant pour chaque masse pendulaire (3, 4) au moins une pièce d'interposition (51) disposée axialement entre le support (2) et ladite masse pendulaire (3, 4).

10. Dispositif selon la revendication 9, chaque pièce d'interposition (51) étant portée par une des masses pendulaires (3, 4).

11. Dispositif selon l'une quelconque des revendications précédentes, comprenant deux organes de roulement (6) des masses pendulaires (3, 4) par rapport au support (2), chaque organe de roulement (6) étant mobile par rapport au support (2) et aux masses pendulaires (3, 4), et apte à coopérer avec une piste de roulement (21) définie par un des organes de liaison (5) et avec une piste de roulement définie par le support (2), afin de permettre le déplacement des masses pendulaires (3, 4) par rapport au support (2).

12. Dispositif selon la revendication 11, la piste de roulement (21) définie par chaque organe de liaison (5) étant ménagée par une partie du contour dudit organe de liaison (5).

13. Dispositif selon la revendication 12, chaque organe de liaison coopérant avec un seul organe de roulement (6) et cet organe de liaison (5) étant, dans un plan orthogonal à l'axe de rotation (X) du support (2), asymétrique par rapport à la normale (N) à la tangente (T) au contact entre l'organe de roulement (6) et l'organe de liaison (5) lorsque le dispositif (1) est au repos.

14. Dispositif selon l'une quelconque des revendications précédentes, comprenant une pluralité de premières (3) et de deuxièmes (4) masses pendulaires, chaque première masse pendulaire (3) étant appariée à une deuxième masse pendulaire (4).

15. Composant pour système de transmission d'un véhicule automobile, notamment double volant amortisseur, convertisseur de couple hydrodynamique ou disque de friction, comprenant un dispositif d'amortissement (1) selon l'une quelconque des revendications 1 à 14, le support (2) du dispositif d'amortissement étant notamment l'un parmi :
- un voile du composant,
- une rondelle de guidage du composant,
- une rondelle de phasage du composant, ou
- un support distinct dudit voile, de ladite rondelle de guidage et de ladite rondelle de phasage.

## Patentansprüche

1. Vorrichtung zur Dämpfung (1) von Torsionsschwingungen, welche umfasst:
- einen Träger (2), der dafür ausgelegt ist, sich um eine Achse (X) drehend zu bewegen,
- wenigstens eine erste (3) und eine zweite (4) Pendelmasse, die axial voneinander beabstandet und bezüglich des Trägers (2) beweglich sind, wobei die erste Pendelmasse (3) auf einer ersten Seite (10) des Trägers (2) angeordnet ist und die zweite Pendelmasse (4) auf einer zweiten Seite (11) des Trägers (2) angeordnet ist,
- zwei Elemente zur Verbindung (5) der ersten (3) und der zweiten (4) Pendelmasse, welche diese Massen zu einem Paar vereinigen, wobei die Verbindungselemente (5) winkelmäßig voneinander beabstandet sind, wobei jedes Verbindungselement (5) teilweise in einer Öffnung (25) aufgenommen ist, die im Träger (2) ausgebildet ist, und jedes Verbindungselement (5) sich winkelmäßig im mathematisch positiven Sinn von einem ersten (5.1) zu einem zweiten (5.2) Ende des Verbindungselements (5) erstrecken,
**dadurch gekennzeichnet, dass** jedes Verbindungselement (5) einem Anschlagelement (40) für die Bewegung der Pendelmassen (3, 4) bezüglich des Trägers (2) zugeordnet ist, wobei das Anschlagelement (40), das dem einen der Verbindungselemente (5) zugeordnet ist, dem ersten (5.1) Ende dieses Verbindungselements (5) näher als dem zweiten (5.2) ist, während das Anschlagelement (40), das dem anderen Verbindungselement (5) zugeordnet ist, dem zweiten (5.2) Ende dieses anderen Verbindungselements (5) näher als dem ersten (5.1) ist.

2. Vorrichtung nach Anspruch 1, wobei jedes Anschlagelement (40) dafür ausgelegt ist, die Stöße zwischen dem Verbindungselement (5) und dem Träger (2) zu dämpfen.

3. Vorrichtung nach Anspruch 1 oder 2, wobei jedes Anschlagelement (40) definiert:
- einen ersten Bereich (42) des Anschlags am Träger (2) für die Bewegung der Pendelmassen (3, 4) bezüglich des Trägers (2) im mathematisch positiven Sinn und
- einen zweiten Bereich (43) des Anschlags am Träger (2) für die Bewegung der Pendelmassen (3, 4) bezüglich des Trägers im mathematisch negativen Sinn.

4. Vorrichtung nach Anspruch 3, wobei jedes Anschlagelement (40) dafür ausgelegt ist, dass:
- einer von dem ersten (42) und dem zweiten (43) Anschlagbereich mit der radial inneren Kontur (56) der Öffnung (25), die das Verbindungselement (5) aufnimmt, in Kontakt kommen kann,
- der andere von dem ersten (42) und dem zweiten (43) Anschlagbereich mit einer seitlichen Kontur (50) der Öffnung (25) in Kontakt kommen kann, wobei diese seitliche Kontur die radial innere Kontur und die radial äußere Kontur der Öffnung (25) verbindet.

5. Vorrichtung nach Anspruch 3 oder 4, wobei jedes Anschlagelement (40) elastische Abschnitte am ersten (42) und zweiten (43) Anschlagbereich umfasst und das Verbindungselement (5) und die Öffnung (25) solche Formen aufweisen, dass, wenn das Verbindungselement (5) unter der Einwirkung einer Trägheitskraft über einen von dem ersten (42) und dem zweiten (43) Anschlagbereich am Träger (2) zur Anlage kommt:
- der elastische Abschnitt des Anschlagbereichs (42, 43) zusammengedrückt wird, solange die Trägheitskraft kleiner als ein vordefinierter Wert ist, und
- das Verbindungselement (5) mit dem Träger (2) in Kontakt kommt, wenn die Trägheitskraft größer als dieser vordefinierte Wert ist.

6. Vorrichtung nach einem der Ansprüche 3 bis 5, wobei jedes Anschlagelement (40) umfasst:
- zwei Haltestangen (46), die winkelmäßig beabstandet sind, und
- ein Verbindungsstück (47), das sich zwischen den zwei Haltestangen (46) erstreckt und dafür ausgelegt ist, mit dem Träger (2) in Kontakt zu kommen, wenn das Verbindungselement (5) am Träger anliegt, wobei der erste Anschlagbereich (42) den Abschnitt des Verbindungsstücks (47) gegenüber einer der Stangen (46) umfasst und der zweite Anschlagbereich (43) den Abschnitt des Verbindungsstücks (47) gegenüber der anderen Stange (46) umfasst.

7. Vorrichtung nach einem der vorhergehenden Ansprüche, wobei der Träger (2) für ein Paar von Pendelmassen (3, 4) umfasst:
- zwei Öffnungen (25), die winkelmäßig beabstandet sind, und
- einen Steg (27), der zwischen diesen Öffnungen (25) angeordnet ist,
wobei jede Öffnung (25) eines der Verbindungselemente (5) aufnimmt und die Öffnungen (25) in einer zur Drehachse (X) orthogonalen Ebene symmetrische Bilder in Bezug auf eine Gerade (D) sind, die durch die Drehachse (X) und durch den die beiden Öffnungen (25) trennenden Steg (27) verläuft.

8. Vorrichtung nach einem der vorhergehenden Ansprüche, wobei sich die im Träger (2) ausgebildete Öffnung (25) zwischen zwei Umfangsenden (50) über einen gegebenen, von der Drehachse (X) aus gemessenen Winkelsektor (α) erstreckt und diese Öffnung (25) in einer zur Achse (X) orthogonalen Ebene asymmetrisch in Bezug auf eine Gerade (DD) ist, die durch die Drehachse (X) verläuft und mit jedem Umfangsende (50) der Öffnung (25) einen Winkel bildet, der gleich der Hälfte des Wertes des Winkelsektors (α) ist.

9. Vorrichtung nach einem der vorhergehenden Ansprüche, welche für jede Pendelmasse (3, 4) wenigstens ein Einsatzstück (51) umfasst, das axial zwischen dem Träger (2) und der Pendelmasse (3, 4) angeordnet ist.

10. Vorrichtung nach Anspruch 9, wobei jedes Einsatzstück (51) von einer der Pendelmassen (3, 4) getragen wird.

11. Vorrichtung nach einem der vorhergehenden Ansprüche, welche zwei Wälzelemente (6) der Pendelmassen (3, 4) in Bezug auf den Träger (2) umfasst, wobei jedes Wälzelement (6) beweglich in Bezug auf den Träger (2) und auf die Pendelmassen (3, 4) ist und dafür ausgelegt ist, mit einer Laufbahn (21), die durch eines der Verbindungselemente (5) definiert ist, und mit einer Laufbahn, die durch den Träger (2) definiert ist, zusammenzuwirken, um die Bewegung der Pendelmassen (3, 4) in Bezug auf den Träger (2) zu ermöglichen.

12. Vorrichtung nach Anspruch 11, wobei die Laufbahn (21), die durch jedes Verbindungselement (5) definiert ist, durch einen Teil der Kontur des Verbindungselements (5) ausgebildet ist.

13. Vorrichtung nach Anspruch 12, wobei jedes Verbindungselement mit einem einzigen Wälzelement (6) zusammenwirkt und dieses Verbindungselement (5) in einer zur Drehachse (X) des Trägers (2) orthogonalen Ebene asymmetrisch bezüglich der Normalen (N) zu der Tangente (T) am Kontakt zwischen dem Wälzelement (6) und dem Verbindungselement (5) ist, wenn sich die Vorrichtung (1) im Ruhezustand befindet.

14. Vorrichtung nach einem der vorhergehenden Ansprüche, welche mehrere erste (3) und zweite (4) Pendelmassen umfasst, wobei jede erste Pendelmasse (3) mit einer zweiten Pendelmasse (4) ein Paar bildet.

15. Komponente für ein Kraftübertragungssystem eines Kraftfahrzeugs, insbesondere Doppeldämpfungsschwungrad, hydrodynamischer Drehmomentwandler oder Reibscheibe, welche eine Vorrichtung zur Dämpfung (1) nach einem der Ansprüche 1 bis 14 umfasst, wobei der Träger (2) der Dämpfungsvorrichtung insbesondere einer ist von:
- einer Flachscheibe der Komponente,
- einer Führungsscheibe der Komponente,
- einer Phasenscheibe der Komponente oder
- einem von der Flachscheibe, der Führungsscheibe und der Phasenscheibe verschiedenen Träger.

## Claims

1. Device (1) for damping torsional oscillations, comprising:
- a support (2) able to move in rotation about an axis (X),
- at least a first (3) and a second (4) pendulum mass these being axially spaced from one another and able to move with respect to the support (2), the first pendulum mass (3) being positioned on a first side (10) of the support (2) and the second pendulum mass (4) being positioned on a second side (11) of the support (2),
- two connecting members (5) connecting the first (3) and the second (4) pendulum masses to pair said masses, the connecting members (5) being angularly spaced relative to one another, each connecting member (5) being housed in part in an opening (25) formed in the support (2), and each connecting member (5) extending angularly in the anticlockwise direction from a first (5.1) towards a second (5.2) end of said connecting member (5), **characterized in that** each connecting member (5) is associated with an end-stop member (40) for the travel of the pendulum masses (3, 4) with respect to the support (2), the end-stop member (40) associated with one of the connecting members (5) being closer to the first (5.1) than to the second (5.2) end of this connecting member (5), whereas the end-stop member (40) associated with the other connecting member (5) is closer to the second (5.2) than to the first (5.1) end of this other connecting member (5).

2. Device according to Claim 1, each end-stop member (40) being configured in such a way as to damp impacts between the connecting member (5) and the support (2).

3. Device according to Claim 1 or 2, each end-stop member (40) defining:
- a first end-stop zone (42) against the support (2) for the travel of the pendulum masses (3, 4) with respect to the support (2) in the anticlockwise direction, and
- a second end-stop zone (43) against the support (2) for the travel of the pendulum masses (3, 4) with respect to the support in the clockwise direction.

4. Device according to Claim 3, each end-stop member (40) being configured so that:
- of the first (42) and second (43) end-stop zones, one can come into contact with the radially interior contour (56) of the opening (25) housing the connecting member (5),
- and of the first (42) and second (43) end-stop zones, the other can come into contact with a lateral contour (50) of said opening (25), this lateral contour connecting the radially interior contour and the radially exterior contour of the opening (25).

5. Device according to Claim 3 or 4, each end-stop member (40) comprising elastic portions in the region of the first (42) and of the second (43) end-stop zone, and the connecting member (5) and the opening (25) having shapes such that when the connecting member (5) comes into abutment against the support (2) via either the first (42) or the second (43) end-stop zone under the effect of an inertial force:
- the elastic portion of said end-stop zone (42, 43) compresses as long as the inertial force is below a predefined value, and
- the connecting member (5) comes into contact with the support (2) when the inertial force is above this predefined value.

6. Device according to any one of Claims 3 to 5, each end-stop member (40) comprising:
- two angularly-spaced retaining rods (46), and
- a joining piece (47) extending between the two retaining rods (46) and being able to come into contact with the support (2) when the connecting member (5) is in abutment against the support,
the first end-stop zone (42) comprising the portion of the joining piece (47) facing one of the rods (46) and the second end-stop zone (43) comprising the portion of the joining piece (47) facing the other rod (46).

7. Device according to any one of the preceding claims, the support (2) comprising, for a pair of pendulum masses (3, 4) :
- two angularly-spaced openings (25), and
- an upright (27) interposed between these openings (25), each opening (25) accepting one of the connecting members (5), and the openings (25) being, in a plane orthogonal to the axis of rotation (X), images which are symmetrical with respect to a straight line (D) passing through the axis of rotation (X) and through the upright (27) separating the two openings (25).

8. Device according to any one of the preceding claims, the opening (25) formed in the support (2) extending between two circumferential ends (50) over a given angular sector (α) measured from the axis of rotation (X), and this opening (25) being, in a plane orthogonal to said axis (X), asymmetric with respect to a straight line (DD) passing through the axis of rotation (X) and making, with each circumferential end (50) of the opening (25), an angle equal to half the value of said angular sector (α).

9. Device according to any one of the preceding claims, comprising, for each pendulum mass (3, 4), at least one interposition piece (51) positioned axially between the support (2) and said pendulum mass (3, 4).

10. Device according to Claim 9, each interposition piece (51) being borne by one of the pendulum masses (3, 4) .

11. Device according to any one of the preceding claims, comprising two rolling members (6) of the pendulum masses (3, 4) relative to the support (2), each rolling member (6) being able to move relative to the support (2) and to the pendulum masses (3, 4) and being able to collaborate with a runway (21) defined by one of the connecting members (5) and with a runway defined by the support (2), so as to allow the pendulum masses (3, 4) to move relative to the support (2).

12. Device according to Claim 11, the runway (21) defined by each connecting member (5) being formed by part of the contour of said connecting member (5).

13. Device according to Claim 12, each connecting member collaborating with just one rolling member (6) and this connecting member (5) being, in a plane orthogonal to the axis of rotation (X) of the support (2), asymmetric with respect to the normal (N) to the tangent (T) at the contact between the rolling member (6) and the connecting member (5) when the device (1) is at rest.

14. Device according to any one of the preceding claims, comprising a plurality of first (3) and second (4) pendulum masses, each first pendulum mass (3) being paired with a second pendulum mass (4).

15. Component for a motor vehicle transmission system, notably a dual-mass flywheel, a hydrodynamic torque convertor or a friction disc, comprising a damping device
(1) according to any one of Claims 1 to 14, the support
(2) of the damping device being notably one of the following:
- a web of the component,
- a guide washer of the component,
- a phase washer of the component, or
- a support distinct from said web, from said guide washer and from said phase washer.
